Europäisches Patentamt

European Patent Office

Office européen des brevets

(11) Publication number: **0 437 878 A1**

## EUROPEAN PATENT APPLICATION

(21) Application number: 90203280.4

(22) Date of filing: 12.12.90

(51) Int. Cl.5: **A61C 13/00**

(30) Priority: **18.01.90 IT 4680690**

(43) Date of publication of application:
**24.07.91 Bulletin 91/30**

(84) Designated Contracting States:
**AT BE CH DE DK ES FR GB GR IT LI LU NL SE**

(71) Applicant: **Bertani, Paolo**
**Via Castellana, 45/1**
**I-42020 Albinea (Reggio Emilia)(IT)**

(72) Inventor: **Bertani, Paolo**
**Via Castellana, 45/1**
**I-42020 Albinea (Reggio Emilia)(IT)**

(74) Representative: **Corradini, Corrado et al**
**Studio Ing. C. CORRADINI & C. S.r.l. 4, Via**
**Dante Alighieri**
**I-42100 Reggio Emilia(IT)**

(54) Device for locating the labial commissure relative to the position of the teeth.

(57) A device for locating the labial commissure relative to the position of the teeth, as heretofore described, comprising a crescent-shaped element (1) provided with an appendix (2) of non-circular cross-section, the axis of which coincides with the intersection of the two planes of symmetry of the element, a cup-shaped template (4) being mounted, with its cavity facing the element (1), on said appendix in a manner slidable but unable to rotate.

FIG. 1

## DEVICE FOR LOCATING THE LABIAL COMMISSURE RELATIVE TO THE POSITION OF THE TEETH

One of the major problems encountered by the constructor of a fixed or mobile dental prosthesis is to set the teeth in the correct position relative to the interior of the patient's mouth.

This is achieved by making meticulous measurements on the mouth structure when in its open and closed positions, using an instrument commonly known as an articulator.

In most cases the results of these measurements enable a denture to be constructed which is very similar to the original denture, but without giving any indication of its aesthetic effect when in the patient's mouth.

Known instruments are inadequate especially when aesthetic defects need correcting, and if a prosthesis constructed on the basis of measurements requires subsequent adjustment this can only be done after it has been fitted to the patient, involving lengthy and laborious trial and error.

The most apparent defects which are currently corrected by subsequent trial and error derive from incorrect spacing between the teeth and lips, and incorrect positioning of the line of the teeth relative to the lip line.

From the aesthetic aspect three basic spatial orientation planes can be defined on the human face, namely the horizontal, the frontal and the sagittal.

In the frontal plane the centre line is of particular importance, as are the "bipupillar line", the "hinge axis", which passes approximately through the centre of the mandibular condyles, and the "occlusion plane", which extends from the point of incision to the disto-buccal cusp of the second right and left lower molar and corresponds approximately to the line of closure of the lip, or the labial commissure.

The most frequent correction which the prosthesis constructor has to make is to properly relate the occlusion plane and the line of the incisor teeth to the labial commissure, so that with the mouth open, for example when smiling, the incisive edges of the teeth are in line with the lips.

The present invention provides an elementary instrument of very simple use which enables the prosthesis constructor to adjust its shape and position relative to the patient's mouth.

According to the invention said instrument consists of a crescent-shaped element of two alternative types. The first type is intended to be gripped between the teeth after initial shaping by virtue of its thermoplastic mesh construction. The second type, of metal, is intended to be inserted, after heating, into the wax of the "test bases" for total mobile prostheses.

Said test bases consist of a slab of wax which is inserted between the patient's gingivae to simulate the degree of opening of the mouth after the prosthesis has been fitted.

Said elements are provided with a rear appendix of non-circular cross-section on which a thermoplastic template in the shape of the lips can slide without rotating.

The accompanying figures show a preferred embodiment of the invention by way of non-limiting example.

Figure 1 is a plan view of the invention with the mobile prosthesis element inserted.

Figure 2 is a plan view of a element formed from thermoplastic mesh.

Figure 3 is a section on a central vertical plane through the device of Figure 1 applied to the patient's mouth.

Figure 4 is a section on a central vertical plane, as Figure 3, but with the device provided with the element of Figure 2.

Figures 5 and 6 show the devices of Figures 3 and 4 with the casting material already injected.

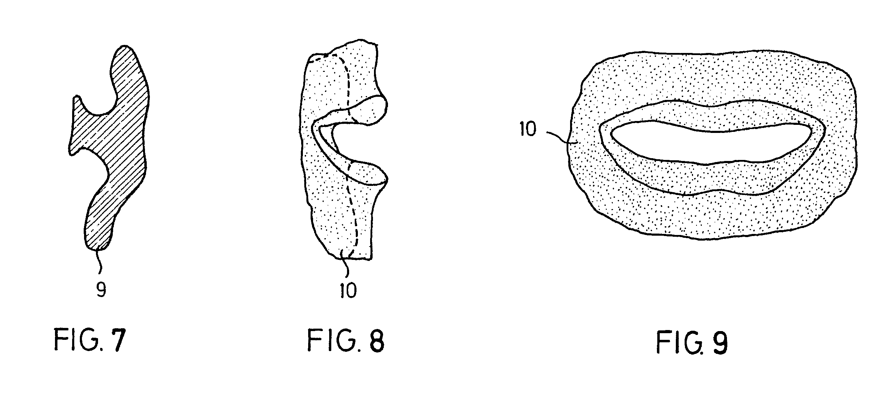

Figure 7 shows the negative cast obtained by the casting of Figures 5 and 6.

Figures 8 and 9 show the positive model of the patient's mouth obtained from the negative cast of Figure 7.

The figures show a crescent-shaped element 1 provided with a rear appendix 2 of rectangular cross-section. On the appendix there slides a sleeve 3 supporting a cup-shaped template 4 for adapting to the patient's lips.

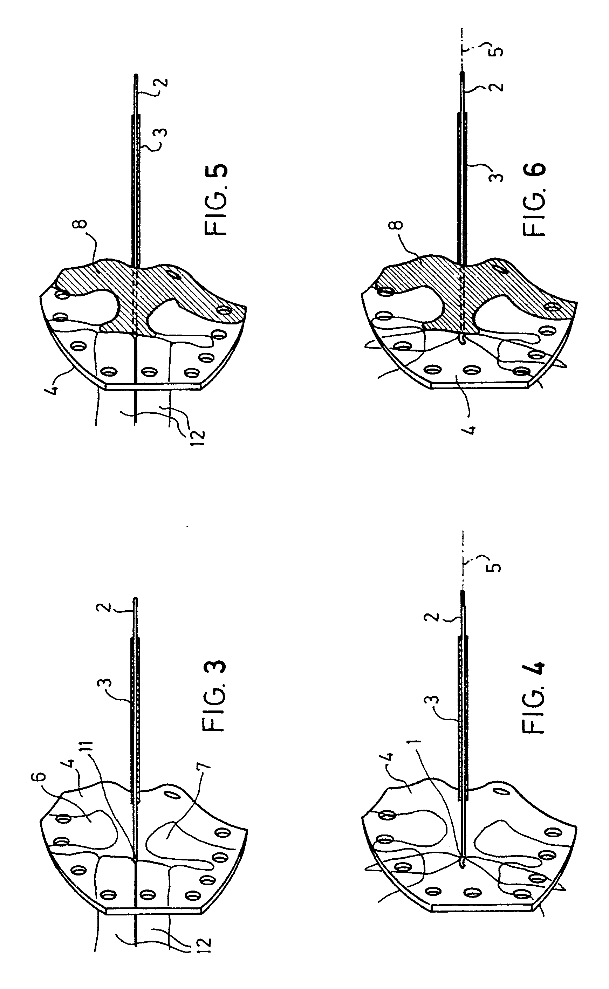

The element 1 is intended to be inserted between the wax test bases 12 shown in Figure 3.

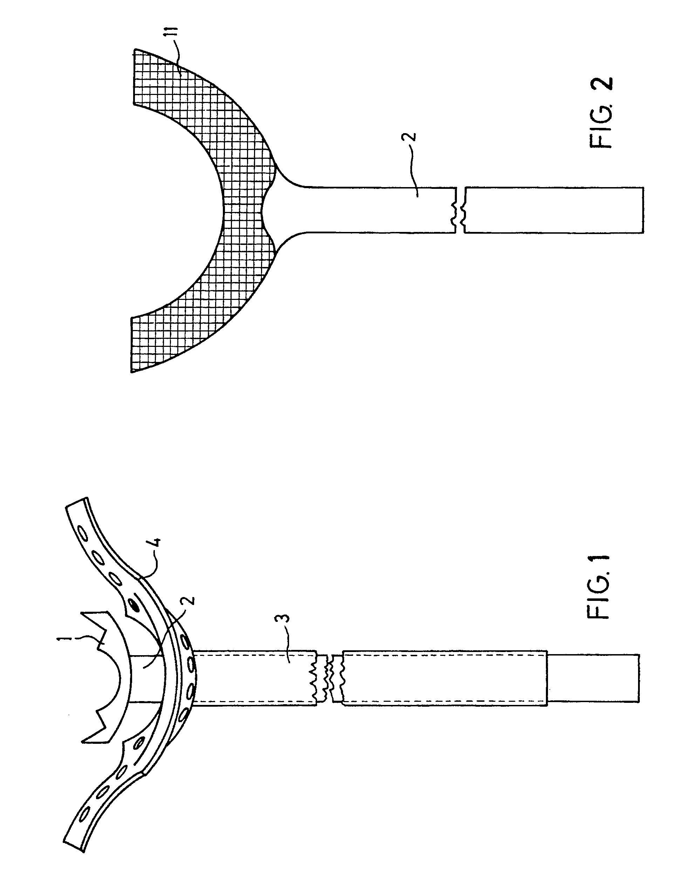

Instead of the element 1 shown in Figure 1 and Figures 3 to 5, the mesh element 11 shown in Figure 2 can be used, this being intended to be gripped between the patient's teeth as shown in Figures 4 and 6, so that it becomes positioned on the occlusion plane 5.

With the element 1 or 11 positioned as stated, the patient is asked to smile by opening his upper lip 6 and lower lip 7 as in Figures 3 and 4, and the template 4 is filled with a quick-setting alginate or irreversible hydrocolloid. It is then pressed against the mouth but without making contact with the lips, or at most undergoing slight contact only at the edge.

When in this position the quick-setting alginate between the template and mouth occupies the space B shown hatched in Figures 5 and 6.

In this manner a cast 9 is obtained, which acts as a mould for the model 10 of the patient's mouth.

Using the cast 9, the model 10 is formed directly onto the teeth already mounted on the articulator, thus giving the prosthesis constructor a clear and definitive view of the patient's mouth.

Alternatively, the model 10 can be formed separately and then applied to the articulator, to enable the prosthesis constructor to correct the position of the teeth as he provisionally applies them to the cast of the gingivae already on the articulator.

This enables the prosthesis to be properly adjusted both before and during construction, and before the dentist tests it on the patient.

The invention is not limited to the single described embodiment, and modifications and improvements can be made thereto but without leaving the scope of protection of the following claims.

## Claims

1. A device for locating the labial commissure relative to the position of the teeth, as heretofore described, characterised by a crescent-shaped element (1) or (11) provided with a rear appendix (2) of non-circular cross-section, the axis of which coincides with the intersection of the two planes of symmetry of the element, a cup-shaped template (4) being mounted, with its cavity facing the element (1), on said appendix in a manner slidable but unable to rotate.

2. A device as claimed in claim 1, characterised in that the element (1) is formed from a metal plate.

3. A device as claimed in claim 1, characterised in that the element (11) is formed from a mesh of thermoplastic resin.

FIG. 2

FIG. 1

FIG. 3

FIG. 4

FIG. 5

FIG. 6

EP 0 437 878 A1

FIG. 7

FIG. 8

FIG. 9

EP 0 437 878 A1

European
Patent Office

**EUROPEAN SEARCH
REPORT**

Application Number

**EP 90 20 3280**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-C-1 271 892 (HÖRAUF)<br>* Claim 1; figure 1 *<br>– – – | | A 61 C<br>13/00 |
| A | DE-C-8 887 47 (SCHOPF)<br>– – – | | |
| A | DE-A-1 491 083 (SCHWARZKOPF)<br>– – – – – | | |

|  |
|---|
| TECHNICAL FIELDS SEARCHED (Int. Cl.5) |
| A 61 C |

The present search report has been drawn up for all claims

| Place of search | Date of completion of search | Examiner |
|---|---|---|
| The Hague | 04 February 91 | VLECK J.M. |